# EUROPEAN PATENT APPLICATION

(11) **EP 4 597 428 A1**
(43) Date of publication of application: **06.08.2025**
(21) Application number: 23869720.5
(22) Date of filing: 09.06.2023
(51) Int. Cl.: G06T 7/521

(54) **DATA COLLECTION DEVICE, METHOD AND APPARATUS, AND STORAGE MEDIUM**

(30) Priority: 27.09.2022 CN 202211182006
(71) Applicant: Hangzhou Hikrobot Co., Ltd., Hangzhou, Zhejiang 310051 (CN)
(72) Inventor: WANG, Chunmao, Hangzhou, Zhejiang 310051 (CN); ZHANG, Wencong, Hangzhou, Zhejiang 310051 (CN)
(74) Representative: Yang, Shu
(86) International application number: PCT/CN2023/099341
(87) International publication number: WO 2024/066471

(57) **Abstract**

A data collection device, method and apparatus, and a storage medium, which relate to the technical field of data processing. The data collection device comprises: a depth camera, a laser light source, a scanning mirror, a laser camera and a processor, wherein the depth camera is used for collecting an initial depth image of an object to be measured; the laser light source is used for emitting laser light to the scanning mirror; the scanning mirror is used for reflecting the laser light to said object in a scanning manner, the laser camera is used for collecting a line laser image of said object during a scanning process, and the processor is used for fusing different line laser images by taking the initial depth image as a reference, so as to obtain a target depth image of said object. By using the solution provided in the embodiments of the present application, the accuracy of an obtained depth image can be improved.

## Description

The present application claims the priority to a Chinese patent application No. 202211182006.6 filed with the China National Intellectual Property Administration (CNIPA) on September 27, 2022 and entitled "DATA COLLECTION DEVICE, METHOD AND APPARATUS, AND STORAGE MEDIUM", which is incorporated herein by reference in its entirety.

### Technical Field

This application relates to the technical field of data processing, in particular to a data acquisition device, method and apparatus, and a storage medium.

### Background

In order to obtain three-dimensional data of an object such as a bolt and a wrench, a depth image of the object can be obtained, and the three-dimensional data of the object such as a length, a width, and a height can be determined based on the depth image.

In related technologies, laser light can be emitted towards an object by usually using a laser light source, and then an image of the object is acquired by using a camera, deformation information of the laser light in the image is detected, and the depth image of the object is obtained based on the deformation information. Subsequently, three-dimensional data of the object can be obtained based on depth information in the depth image.

Although the depth image of the object can be obtained by applying the above solution, the laser light irradiated to the object may be interfered with due to reflection and refraction on the surface of the object, and other reasons, resulting in lower accuracy of the obtained deformation information when detecting the deformation information of the laser light in the image, and low accuracy of the obtained depth image of the object.

### Summary

The purpose of embodiments of the present application is to provide a data acquisition device, method and apparatus, and a storage medium, to improve the accuracy of the obtained depth image of the object. The specific technical solutions are as follows.

In the first aspect, the embodiment of the present application provides a data acquisition device including a depth camera, a laser light source, a scanning mirror, a laser camera and a processor, wherein:
the depth camera is configured for acquiring an initial depth image of a to-be-measured object;
the laser light source is configured for emitting laser light towards the scanning mirror; and the scanning mirror is configured for reflecting the laser light towards the to-be-measured object in a scanning manner;
the laser camera is configured for acquiring line laser images of the to-be-measured object during scanning;
the processor is configured for fusing different line laser images by taking the initial depth image as a reference, to obtain a target depth image of the to-be-measured object.

In one embodiment of the present application, the processor is specifically configured for:
for each of the line laser images, determining a match area for the line laser image in the initial depth image;
fusing the different line laser images according to distribution positions of match areas corresponding to the different line laser images in the initial depth image, to obtain the target depth image of the to-be-measured object.

In one embodiment of the present application, in a static scanning scene, the processor is specifically configured for:
for the different line laser images, fusing all of the line laser images by taking a same initial depth image as a reference, to obtain the target depth image of the to-be-measured object;
   or
the depth camera is specifically configured for acquiring multiple initial depth images of the to-be-measured object;
the processor is specifically configured for:
   fusing the acquired multiple initial depth images to obtain a fused depth image;
   for each of the line laser images, determining a match area for the line laser image in the fused depth image;
   fusing the different line laser images according to distribution positions of match areas corresponding to the different line laser images in the fused depth image, to obtain the target depth image of the to-be-measured object.
   In one embodiment of the present application, in a dynamic scanning scene, the depth camera is specifically configured for acquiring multiple initial depth images of the to-be-measured object during dynamic scanning, wherein acquisition time of each of the initial depth image is synchronized with acquisition time of each of the line laser images;
   the processor is specifically configured for:
      for each of the line laser images, determining a match area for the line laser image in an initial depth image synchronously acquired with the line laser image;
      fusing the different line laser images according to distribution positions of match areas corresponding to the different line laser images in different initial depth images, to obtain the target depth image of the to-be-measured object.

In one embodiment of the present application, the processor is specifically configured for:
for each of the line laser images, determining the match area for the line laser image in the initial depth image synchronously acquired with the line laser image;
for the different initial depth images, obtaining differences between the different initial depth images, and calculating pose change information of the depth camera by using the differences between the different initial depth images; performing a position correction on the match areas corresponding to the different line laser images in the different initial depth images by using the calculated pose change information;
fusing the different line laser images according to distribution positions of position-corrected match areas corresponding to the different line laser images in the different initial depth images, to obtain the target depth image of the to-be-measured object.

In one embodiment of the present application, the depth camera includes a time-of-flight TOF light source and a TOF camera, wherein the TOF light source is configured for emitting TOF light towards the to-be-measured object;
the TOF camera is configured for obtaining the initial depth image of the to-be-measured object based on a flight duration of the TOF light, wherein the flight duration is a duration between an emission time when the TOF light source emits the TOF light and a reception time when the TOF camera receives the TOF light reflected by the to-be-measured object.

In one embodiment of the present application, the laser camera is a binocular camera;
and/or
the laser light source is a multi-line laser light source or a single-line laser light source.

In one embodiment of the present application, the scanning mirror includes a reflective mirror and a motion mechanism, the motion mechanism being configured for driving the reflective mirror to move.

In the second aspect, an embodiment of the present application provides a data acquisition method applied to a processor in a data acquisition device, wherein the data acquisition device further comprises a depth camera, a laser light source, a scanning mirror, and a laser camera;
the method comprises:
receiving an initial depth image of a to-be-measured object obtained by the depth camera;
receiving line laser images of the to-be-measured object acquired by the laser camera, wherein the line laser images are acquired by the laser camera during the scanning mirror reflecting laser light which is emitted by the laser light source towards the scanning mirror, in a scanning manner towards the to-be-measured object;
fusing different line laser images by taking the initial depth image as a reference, to obtain a target depth image of the to-be-measured object.

In one embodiment of the present application, fusing the different line laser images by taking the initial depth image as the reference, to obtain the target depth image of the to-be-measured object, includes:
for each of the line laser images, determining a match area for the line laser image in the initial depth image;
fusing the different line laser images according to distribution positions of match areas corresponding to the different line laser images in the initial depth image, to obtain the target depth image of the to-be-measured object.

In one embodiment of the present application, in a static scanning scene, fusing the different line laser images by taking the initial depth image as the reference, to obtain the target depth image of to-be-measured object, includes:
for the different line laser images, fusing all of the line laser images by taking a same initial depth image as a reference, to obtain the target depth image of the to-be-measured object;
   or
fusing received multiple initial depth images to obtain a fused depth image; for each of the line laser images, determining a match area for the line laser image in the fused depth image; fusing the different line laser images according to distribution positions of match areas corresponding to the different line laser images in the fused depth image, to obtain the target depth image of the to-be-measured object.

In one embodiment of the present application, in a dynamic scanning scene, fusing the different line laser images by taking the initial depth image as the reference, to obtain the target depth image of the to-be-measured object, includes:
for each of the line laser images, determining a match area for the line laser image in an initial depth image synchronously acquired with the line laser image;
fusing the different line laser images according to distribution positions of match areas corresponding to the different line laser images in different initial depth images, to obtain the target depth image of the to-be-measured object.

In one embodiment of the present application, fusing the different line laser images according to the distribution positions of the match areas corresponding to the different line laser images in the different initial depth images, to obtain the target depth image of the to-be-measured object, includes:
for the different initial depth images, obtaining differences between the different initial depth images, and calculating pose change information of the depth camera by using the differences between the different initial depth images; performing a position correction on the match areas corresponding to the different line laser images in the different initial depth images by using the calculated pose change information;
fusing the different line laser images according to distribution positions of position-corrected match areas corresponding to the different line laser images in the different initial depth images, to obtain the target depth image of the to-be-measured object.
In the third aspect, an embodiment of the present application provides a data acquisition apparatus arranged at a processor in a data acquisition device, wherein the data acquisition device further includes a depth camera, a laser light source, a scanning mirror, and a laser camera;
the apparatus includes:
   a first image receiving module, configured for receiving an initial depth image of a to-be-measured object obtained by the depth camera;
   a second image receiving module, configured for receiving line laser images of the to-be-measured object acquired by the laser camera, wherein the line laser images are acquired by the laser camera during the scanning mirror reflecting laser light which is emitted by the laser light source towards the scanning mirror, in a scanning manner towards the to-be-measured object;
   a target depth image determination module, configured for fusing different line laser images by taking the initial depth image as a reference, to obtain a target depth image of the to-be-measured object.

In one embodiment of the present application, the target depth image determination module is specifically configured for:
for each of the line laser images, determining a match area for the line laser image in the initial depth image;
fusing the different line laser images according to distribution positions of match areas corresponding to the different line laser images in the initial depth image, to obtain the target depth image of the to-be-measured object.

In one embodiment of the present application, in a static scanning scene, the target depth image determination module is specifically configured for:
for the different line laser images, fusing all of the line laser images by taking a same initial depth image as a reference, to obtain the target depth image of the to-be-measured object;
   or,
fusing received multiple initial depth images to obtain a fused depth image; for each of the line laser images, determining a match area for the line laser image in the fused depth image; fusing the different line laser images according to distribution positions of match areas corresponding to the different line laser images in the fused depth image, to obtain the target depth image of the to-be-measured object.

In one embodiment of the present application, in a dynamic scanning scene, the target depth image determination module includes:
an area determination submodule configured for: for each of the line laser images, determining a match area for the line laser image in an initial depth image synchronously acquired with the line laser image;
a target depth image determination submodule configured for fusing the different line laser images according to distribution positions of match areas corresponding to the different line laser images in different initial depth images, to obtain the target depth image of the to-be-measured object.

In one embodiment of the present application, the target depth image determination submodule is specifically configured for:
for the different initial depth images, obtaining differences between the different initial depth images, and calculating pose change information of the depth camera by using the differences between the different initial depth images; performing a position correction on the match areas corresponding to the different line laser images in the different initial depth images by using the calculated pose change information;
fusing the different line laser images according to distribution positions of position-corrected match areas corresponding to the different line laser images in the different initial depth images, to obtain the target depth image of the to-be-measured object.

In the fourth aspect, an embodiment of the present application provides a computer-readable storage medium having stored therein a computer program, wherein the computer program, when executed by a processor, carries out any one of the methods described in the above second aspect.

In the fifth aspect, the embodiment of the present application further provides a computer program product containing instructions that, when running on a computer, cause the computer to carry out any one of the methods described in the above second aspect.

The beneficial effects of the embodiments of the present application are as follows:
In the data acquisition solutions provided in the embodiments of the present application, the data acquisition device includes the depth camera, the laser light source, the scanning mirror, the laser camera and the processor, wherein the depth camera is configured for acquiring the initial depth image of the to-be-measured object; the laser light source is configured for emitting laser light towards the scanning mirror; the scanning mirror is configured for reflecting the laser light towards the to-be-measured object in a scanning manner; the laser camera is configured for acquiring the line laser images of the to-be-measured object during scanning; and the processor is configured for fusing different line laser images by taking the initial depth image as a reference, to obtain the target depth image of the to-be-measured object. In this way, the initial depth image of the to-be-measured object can be obtained by the depth camera, and laser light is emitted towards the scanning mirror by using the laser light source; the scanning mirror reflects the laser light towards the to-be-measured object in a scanning manner; the laser camera acquires the line laser image of the to-be-measured object during scanning; and the processor combines the initial depth image and the line laser images to obtain the target depth image of the to-be-measured object. Since the laser light has a concentrated energy, the imaging quality of line laser images is relatively high. For example, the line laser images can achieve the better imaging quality on highly reflective surfaces and black surfaces. The embodiments of the present application can obtain the more accurate target depth image based on the line laser images with a higher imaging quality. Thus it can be seen that, by using the solutions provided in the embodiments of the present application, the accuracy of an obtained target depth image of the object can be improved.

### Brief Description of the Drawings

The drawings described herein are intended to provide a further understanding of the present application and form a part of the same. The illustrative embodiments of the present application and their explanations are used to explain the present application and do not constitute an improper limitation of the present application.
Figure 1 is a schematic diagram of a structure of a data acquisition device provided in an embodiment of the present application;
Figure 2 is a schematic diagram of a structure of another data acquisition device provided in an embodiment of the present application;
Figure 3 is a schematic diagram of a flow of a data acquisition method provided in an embodiment of the present application;
Figure 4 is a schematic diagram of a structure of a data acquisition apparatus provided in an embodiment of the present application.

### Detailed Description

In order to make the objects, technical solutions, and advantages of the present application clearer, the present application will be further described in detail with reference to the attached drawings and embodiments. Obviously, the described embodiments are only some, and not all, of the embodiments of the present application. Based on the embodiments in the present application, all other embodiments acquired by those ordinary skilled in the art belong to the protection scope of the present application.

In order to improve the accuracy of the obtained depth image of the object, the embodiments of the present application provide a data acquisition device, method and apparatus, and a storage medium, which will be described in detail below.

An embodiment of the present application provides a data acquisition device including a depth camera, a laser light source, a scanning mirror, a laser camera, and a processor, wherein:
the depth camera is configured for acquiring an initial depth image of a to-be-measured object;
the laser light source is configured for emitting laser light towards the scanning mirror; and the scanning mirror is configured for reflecting the laser light towards the to-be-measured object in a scanning manner;
the laser camera is configured for acquiring line laser images of the to-be-measured object during scanning;
the processor is configured for fusing different line laser images by taking the initial depth image as a reference, to obtain a target depth image of the to-be-measured object.

In this way, firstly, the initial depth image of the to-be-measured object can be obtained by using the deep camera; and then the laser light is emitted towards the scanning mirror by using the laser light source; the scanning mirror reflects the laser light towards the to-be-measured object in a scanning manner; the laser camera acquires the line laser images of the to-be-measured object during scanning; and the processor combines the initial depth image and the line laser images to obtain the target depth image of the to-be-measured object. Thus it can be seen that, by using the solution provided in the embodiments of the present application, the accuracy of an obtained target depth image of the object can be improved.

The following is a detailed introduction of the above data acquisition device.

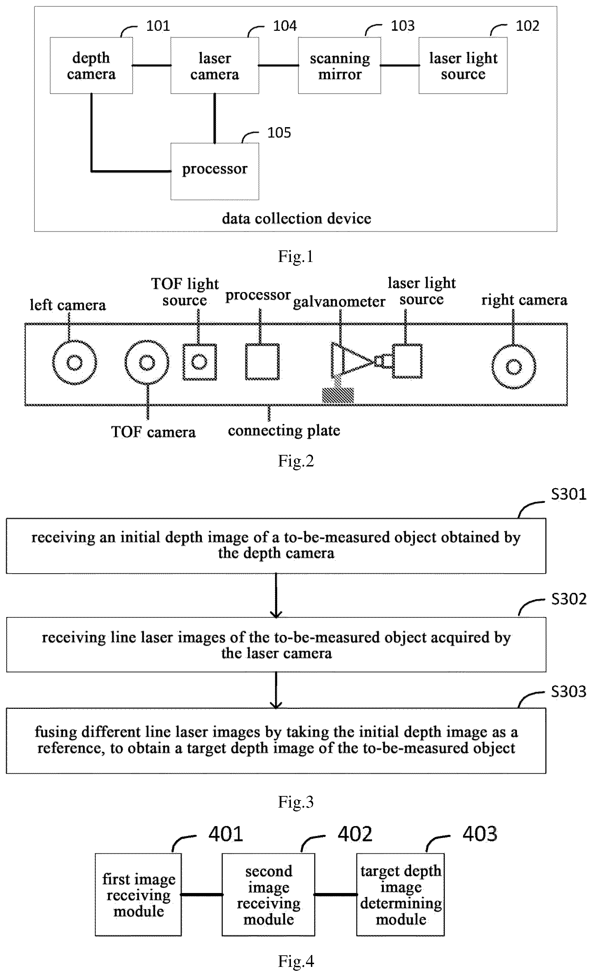

Referring to Figure 1, which is a schematic diagram of a structure of a data acquisition device provided by an embodiment of the present application, the data acquisition device includes a depth camera 101, a laser light source 102, a scanning mirror 103, a laser camera 104, and a processor 105, wherein:
the depth camera 101 is configured for acquiring an initial depth image of a to-be-measured object;
the laser light source 102 is configured for emitting laser light towards the scanning mirror 103; the scanning mirror 103 is configured for reflecting the laser light towards the to-be-measured object in a scanning manner;
the process of emitting the laser light towards the scanning mirror 103 by the laser light source 102 to scan the to-be-measured object can be referred to as a galvanometer scan.
the laser camera 104 is configured for acquiring line laser images of the to-be-measured object during scanning;
the processor 105 is configured for fusing different line laser images by taking the initial depth image as a reference, to obtain a target depth image of the to-be-measured object.

The above laser light source 102 is a multi-line laser light source or a single-line laser light source.

The laser light emitted by the above laser light source 102 can be linear light, planar light, lattice light, etc. The laser camera 104 can be a monocular camera, a binocular camera, etc.

The relative pose relationship between the depth camera 101 and the camera 104 remains unchanged during the image acquisition.

For example, the depth camera 101 can be fixedly connected to the laser camera 104 through a connecting component such as a connecting rod, a connecting plate, etc., to ensure that the relative pose relationship between the depth camera 101 and the laser camera 104 remains unchanged.

For another example, the depth camera 101 and the laser camera 104 can be installed separately. In this case, poses of these two cameras can be calibrated when installing the two cameras to ensure that the relative pose relationship between these two cameras remains unchanged during the image acquisition. For example, the relative pose relationship between these two cameras can be pre-set, and when installing these two cameras, one of them is firstly installed, and then the pose of the other camera is determined based on the pose of the installed camera and the preset relative pose relationship, so as to install the other camera according to the determined pose.

The depth camera 101 and the laser camera 104 are communicatively connected to the processor 105 through a wired connection or a wireless connection respectively, so that the processor 105 can obtain images of the to-be-measured object acquired by the depth camera 101 and the laser camera 104.

The above to-be-measured object can be a person, a bolt, a wrench, etc.

The above processor 105 can fuse different line laser images based on camera parameters of the depth camera 101 and the laser camera 104. The camera parameters mentioned above can include: intrinsic parameters of the depth camera 101, intrinsic parameters of the laser camera 104, and a pose transformation relationship between the depth camera 101 and the laser camera 104. The intrinsic parameters mentioned above refer to a focal length, a center point, a distortion coefficient, etc. The camera parameters can be obtained by pre-calibrating.

The laser light source 102 can emit laser light towards the scanning mirror 103, which reflects the laser light onto the to-be-measured object. The laser camera 104 then acquires the line laser images of the to-be-measured object. Since a surface of the to-be-measured object is often not planar, the laser light distributed on the surface of the to-be-measured object in the line laser image will be deformed, which can reflect the depth information of the surface of the to-be-measured object. The laser camera 104 can send the line laser images to the processor 105.

The above-mentioned scanning mirror 103 can be a mechanical rotating mirror or a MEMS (Micro-Electro-Mechanical System) rotating mirror.

In one embodiment of the present application, the above scanning mirror 103 includes a reflective mirror and a motion mechanism, the motion mechanism being configured for driving the reflective mirror to move.

The processor 105 can receive the initial depth image and the line laser images mentioned above, and then determining the target depth image of the to-be-measured object by taking the initial depth image as a reference, based on the line laser images and the camera parameters of the depth camera 101 and the laser camera 104.

In the process of fusing different line laser images, for different line laser images, the processor 105 can fuse the line laser images based on a same initial depth image, or fuse the line laser images based on different initial depth images.

Various implementations for the fusion of the line laser images by the processor 105 can be referred to the subsequent embodiments, which will not be described in detail here.

The depth camera 101 is configured for acquiring the initial depth image of the to-be-measured object.

In one embodiment of the present application, the above depth camera 101 can be a TOF (Time of Flight) camera, including a TOF light source and a TOF camera. TOF light emitted by the TOF light source can be point shaped light, linear light, planar light, lattice light, light spot, etc. The above TOF camera can be a monocular camera, a binocular camera, etc.

Specifically, the above-mentioned TOF camera can use iTOF (Indirect Time-of-Flight) technology or DTOF (Direct Time-of-Flight) technology for depth image acquisition, and an initial depth image on the order of cm (centimeter) can be obtained.

The TOF camera is configured for obtaining the initial depth image of the to-be-measured object based on the flight duration of the TOF light, wherein the flight duration is time duration between an emission time when the TOF light source emits the TOF light and a reception time when the TOF camera receives the TOF light reflected by the to-be-measured object.

Specifically, the TOF light source can emit the TOF light towards the to-be-measured object, and the to-be-measured object can reflect the above TOF light. The TOF camera can receive the TOF light reflected by the to-be-measured object and determine the emission time when the TOF light source emits the TOF light and the reception time when the TOF camera receives the TOF light reflected by the to-be-measured object. A time difference between the emission time and the reception time is calculated as the flight duration of the TOF light from the TOF light source to the to-be-measured object and from the to-be-measured object to the TOF camera. Based on the flight duration and a propagation rate of the TOF light, a distance between the TOF camera and the to-be-measured object is calculated, and based on the distance, the depth image of the to-be-measured object is obtained as the initial depth image. The TOF camera can send the initial depth image to the processor 105. In this way, firstly, the initial depth image of the to-be-measured object can be obtained by using the deep camera; and then the laser light is emitted towards the scanning mirror 103 by using the laser light source 102; the scanning mirror 103 reflects the laser light towards the to-be-measured object in a scanning manner; the laser camera 104 acquires the line laser images of the to-be-measured object during scanning; and the processor 105 combines the initial depth image and the line laser images to obtain the target depth image of the to-be-measured object. Thus it can be seen that, by using the solutions provided in the embodiments of the present application, the accuracy of an obtained target depth image of the object can be improved.

The following is a description of the implementation of the above fusing of the line laser images by the processor.

In one embodiment of the present application, the above processor 105 is specifically configured for:
for each of the line laser images, determining a match area for the line laser image in the initial depth image;
fusing different line laser images according to distribution positions of match areas corresponding to different line laser images in the initial depth image, to obtain the target depth image of the to-be-measured object.

Specifically, the line laser image and the initial depth image are images obtained by acquiring a same to-be-measured object using different cameras. Therefore, both the line laser image and the initial depth image contain an object area corresponding to the same to-be-measured object. Furthermore, since the laser camera acquires the image of the to-be-measured object during scanning the to-be-measured object by the laser light, an area where the laser light is located in the line laser image belongs to the object area corresponding to the to-be-measured object. In view of this, the match area for the line laser image in the initial depth image can be understood as an area in the initial depth image corresponding to a part of the to-be-measured object that corresponds to an area where the laser light is located in the line laser image.

For example, the above to-be-measured object can be a bolt, the above line laser image can be an image of the bolt acquired by the laser camera when the laser light scans a nut of the bolt, and the above initial depth image is an image of the bolt captured by the depth camera. In this case, the match area for the laser image in the initial depth image can be understood as an area in the initial depth image corresponding to the nut of the bolt.

The different line laser images are acquired at different acquisition times, and the areas where the laser light is located in the images are also different. For each of the line laser images, the match area for this line laser image can be determined in the initial depth image.

In one embodiment of the present application, for each line laser image, an image feature match is performed between the line laser image and the initial depth image, to determine an area in the initial depth image that corresponds to the same reality scene as the line laser image. That is, image features of the area where the laser light is located in the line laser image and image features of the initial depth image are extracted, and a feature match on the image features extracted from both images is performed, thus enabling to determine features among features of the initial depth image that match the image features of the line laser image, and to determine, in the initial depth image, an image area characterized by the matched features as the above match area.

The above same reality scene can be understood as an object area of the to-be-measured object. For example, if the above to-be-measured object is a bolt, the object area of the to-be-measured object can be an area where a nut of the bolt is located. The area in the initial depth image that corresponds to the same reality scene is the match area.

After determining the match areas corresponding to the line laser images, according to distribution positions of the match areas corresponding to the line laser images in the initial depth image, area content of areas in which the laser light area located in the line laser images are stitched together to obtain a stitched image, which serves as the above target depth image.

In one embodiment of the present application, the line laser images can be fused based on solutions in related art, which will not be further elaborated here.

Scanning the to-be-measured object using laser light can be divided into static scanning and dynamic scanning. In the static scanning scene, the to-be-measured object and the data acquisition device remain stationary relative to each other during scanning; in the dynamic scanning scene, there is a relative motion between the to-be-measured object and the data acquisition device during scanning.

The following describes the specific implementations of fusing the line laser images by the processor 105 in both static and dynamic scanning scenes.

For example, in the static scanning scene, the processor 105 can fuse the line laser images by using any one of the following two implementations.

In a first implementation, the processor 105 is specifically configured for:
for the different line laser images, fusing all of the line laser images by taking a same initial depth image as a reference, to obtain the target depth image of the to-be-measured object.
In a second implementation, the depth camera 101 is specifically configured for acquiring a multiple initial depth image of the to-be-measured object;
the processor 105 is specifically configured for:
   fusing the acquired multiple initial depth image to obtain a fused depth image;
   for each of the line laser images, determining a match area for the line laser image in the fused depth image;
   fusing the different line laser images according to distribution positions of the match areas corresponding to the different line laser images in the fused depth image, to obtain the target depth image of the to-be-measured object.

For another example, in the dynamic scanning scene, the depth camera 101 is specifically configured for: acquiring multiple initial depth images of the to-be-measured object during dynamic scanning, wherein acquisition time of each of the initial depth images is synchronized with acquisition time of each of the line laser images;
the processor 105 is specifically configured for:
for each of the line laser images, determining a match area for the line laser image in an initial depth image synchronously acquired with the line laser image;
fusing the different line laser images according to distribution positions of match areas corresponding to different line laser images in different initial depth images, to obtain the target depth image of the to-be-measured object.

Due to the fact that the different line laser images are acquired at different times, a process of image feature match between the line laser images acquired at different times and the initial depth images can be referred to as feature match in the time-domain.

In one embodiment of the present application, the processor 105 is specifically configured for:
for each of the line laser images, determining a match area for the line laser image in an initial depth image synchronously acquired with the line laser image;
for the different initial depth images, obtaining differences between different initial depth images, and calculating pose change information of the depth camera 101 by using the differences between the different initial depth images, and performing a position correction on the match areas corresponding to the different line laser images in the different initial depth images by using the calculated pose change information;
fusing the different line laser images according to distribution positions of position-corrected match areas corresponding to the different line laser images in the different initial depth images, to obtain the target depth image of the to-be-measured object. Referring to Figure 2, which is a schematic diagram of a structure of another data acquisition device provided by an embodiment of the present application, the data acquisition device includes a TOF light source, a TOF camera, a laser light source, a laser camera, a processor, and a galvanometer. The laser camera can be divided into a left camera and a right camera. The TOF light source, TOF camera, laser light source, laser camera, processor, and galvanometer are fixedly installed on a connecting plate.

The galvanometer is similar to the scanning mirror mentioned above, and both of the galvanometer and the scanning mirror are configured for reflecting laser light towards the to-be-measured object in a scanning manner.

The laser light source is configured towards emit laser light to the galvanometer, which reflects the received laser light onto the to-be-measured object, to enable to scan the to-be-measured object using the laser light;
The laser camera is configured for capturing multiple laser images of the to-be-measured object during scanning;
TOF light source is configured for emitting TOF light towards the to-be-measured object;
The TOF camera is configured for obtaining multiple initial depth images of the to-be-measured object based on a flight duration of the TOF light during scanning, where acquisition time of each of the initial depth images is synchronized with acquisition time of each of the laser images;
The processor is configured for: for each of the laser images, obtaining a reference depth image of the to-be-measured object based on the laser image, camera parameters of the TOF camera and the laser camera by taking an initial depth image synchronously acquired with the laser image as a reference; fusing multiple reference depth images to obtain the target depth image of the to-be-measured object.

In the data acquisition solution provided in the above embodiment, the data acquisition device includes the time-of-flight TOF light source, the TOF camera, the laser light source, the laser camera, and the processor, wherein the TOF light source is configured for emitting TOF light towards the to-be-measured object; the TOF camera is configured for obtaining the initial depth images of the to-be-measured object based on the flight duration of the TOF light, wherein the flight duration is the time duration between an emission time when the TOF light source emits the TOF light and a reception time when the TOF light reflected by the to-be-measured object is received; the laser light source is configured for emitting laser light towards the to-be-measured object; the laser camera is configured to acquire the laser images of the to-be-measured object; the processor is configured to determine the target depth image of the to-be-measured object based on the laser images, and the camera parameters of the TOF camera and laser camera, by taking the initial depth images as references. In this way, firstly, the initial depth images of the to-be-measured object can be obtained by using the TOF light, and then the above initial depth images and laser images can be fused based on the camera parameters of the TOF camera and laser camera, and the depth image of the to-be-measured object is obtained by combining the initial depth images and the laser images. It can be seen that, by applying the solution provided by the above embodiment, the accuracy of the obtained depth image of the object can be improved.

Referring to Figure 3, which is a schematic diagram of a flow of a data acquisition method provided in an embodiment of the present application. The method is applied to a processor in a data acquisition device, and the data acquisition device further includes a depth camera, a laser light source, a scanning mirror, and a laser camera. Specifically, the relative pose relationship between the depth camera and the laser camera remains unchanged during image acquisition. In one case, the depth camera is fixedly connected to the laser camera.

The method includes:
S301, receiving an initial depth image of a to-be-measured object obtained by the depth camera.
S302, receiving line laser images of the to-be-measured object acquired by the laser camera.

Wherein the line laser images are acquired by the laser camera during the scanning mirror reflecting the laser light which is emitted by the laser light source towards the scanning mirror, in a scanning manner towards the to-be-measured object.

S303, fusing different line laser images by taking the initial depth image as a reference, to obtain a target depth image of the to-be-measured object.

In addition, the embodiment of the present application does not limit the execution order of the steps S301 and S302 mentioned above. It is possible to firstly perform step S301 and then perform step S302; it is also possible to firstly perform step S302 and then perform step S301; it is also possible to perform steps S301 and S302 in parallel.

In one embodiment of the present application, fusing the different line laser images by taking the initial depth image as the reference, to obtain the target depth image of the to-be-measured object, includes:
for each of the line laser image, determining a match area for the line laser image in the initial depth image;
fusing the different line laser images according to distribution positions of match areas corresponding to the different line laser images in the initial depth image, to obtain the target depth image of the to-be-measured object.

By applying the data acquisition solution provided in the embodiment of the present application, the accuracy of the obtained target depth image of the to-be-measured object can be improved.

In one embodiment of the present application, in a static scanning scene, fusing the different line laser images by taking the initial depth image as the reference, to obtain the target depth image of the to-be-measured object, includes:
for the different line laser images, fusing all of the line laser images by taking a same initial depth image as a reference, to obtain the target depth image of the to-be-measured object.

By applying the data acquisition solution provided in the embodiment of the present application, the accuracy of the obtained target depth image of the to-be-measured object can be improved.

In one embodiment of the present application, in a static scanning scene, fusing the different line laser images by taking the initial depth image as the reference, to obtain the target depth image of the to-be-measured object, includes:
fusing acquired multiple initial depth images to obtain a fused depth image; for each of the line laser images, determining a match area for the line laser image in the fused depth image; fusing the different line laser images according to distribution positions of match areas corresponding to the different line laser images in the fused depth image, to obtain the target depth image of the to-be-measured object.

When using the solution provided in the embodiment of the present application to acquire data, since the fused depth image is derived from multiple initial depth images, three-dimensional object information of the to-be-measured object contained in the fused depth image is more comprehensive. In this way, for each of the line laser images, the match area corresponding to the line laser image can be accurately determined in the fused depth image, and then the different line laser images are fused according to the distribution position of the more accurate match area corresponding to each of the line laser images to obtain the above target depth image, which can improve the accuracy of the obtained target depth image.

In one embodiment of the present application, in a dynamic scanning scene, fusing the different line laser images by taking the initial depth image as the reference, to obtain the target depth image of the to-be-measured object, includes:
for each of the line laser image, determining a match area for the line laser image in an initial depth image synchronously acquired with the line laser image;
fusing the different line laser images according to distribution positions of match areas corresponding to the different line laser images in different initial depth images to obtain the target depth image of the to-be-measured object.

By applying the data acquisition solution provided in the embodiment of the present application, the accuracy of the obtained target depth image of the to-be-measured object can be improved.

In one embodiment of the present application, fusing the different line laser images according to the distribution positions of the match areas corresponding to the different line laser images in the different initial depth images to obtain the target depth image of the to-be-measured object, includes:
for the different initial depth images, calculating pose change information of the depth camera by using differences between the different initial depth images, and performing a position correction on the match areas corresponding to the different line laser images in the different initial depth images by using the calculated pose change information;
fusing the different line laser images according to distribution positions of position-corrected match areas corresponding to the different line laser images in the different initial depth image, to obtain the target depth image of the to-be-measured object.

When using the solution provided in the embodiment of the present application to acquire data, it is possible to perform the position correction on the match areas corresponding to the different line laser images in the different initial depth images, which can improve the accuracy of the match areas corresponding to the different line laser images in the different initial depth images. Therefore, by fusing the different line laser images according to the distribution positions of the position-corrected match areas, the accuracy of the obtained target depth image can be improved.

In addition to the beneficial effects mentioned above, the above-mentioned method embodiments also have the following beneficial effects:
in each of the above method embodiments, the initial depth image of the to-be-measured object can be obtained by using the depth camera, and laser light is emitted towards the scanning mirror by using the laser light source; the scanning mirror reflects the laser light towards the to-be-measured object in a scanning manner; the laser camera acquires the line laser images of the to-be-measured object during scanning; and the processor combines the initial depth image and the line laser images to obtain the target depth image of the to-be-measured object. Thus it can be seen that, by using the solutions provided in the embodiments of the present application, the accuracy of an obtained target depth image of the object can be improved.

Referring to Figure 4, which is a schematic diagram of a structure of a data acquisition apparatus provided in an embodiment of the present application. The apparatus is arranged at a processor in a data acquisition device, and the data acquisition device further includes a depth camera, a laser light source, a scanning mirror, and a laser camera. Specifically, the relative pose relationship between the depth camera and the laser camera remains unchanged during image acquisition. In one case, the depth camera is fixedly connected to the laser camera.
the apparatus includes:
a first image receiving module 401, configured for receiving an initial depth image of a to-be-measured object obtained by the depth camera;
a second image receiving module 402, configured for receiving line laser images of the to-be-measured object acquired by the laser camera, wherein the line laser images are acquired by the laser camera during the scanning mirror reflecting laser light which is emitted by the laser light source towards the scanning mirror, in a scanning manner towards the to-be-measured object;
a target depth image determination module 403, configured for fusing different line laser images by taking the initial depth image as a reference, to obtain a target depth image of the to-be-measured object.

When using the solution provided in the embodiments of the present application to acquire data, since the laser light has a concentrated energy, the imaging quality of the line laser images is high. Therefore, the embodiments of the present application can obtain the more accurate target depth image based on the line laser images with a high imaging quality. Thus it can be seen that, by using the solution provided in the embodiment of the present application, the accuracy of the obtained target depth image of the object can be improved.

In one embodiment of the present application, the target depth image determination module 403 is specifically configured for:
for each of the line laser images, determining a match area for the line laser image in the initial depth image;
fusing the different line laser images according to distribution positions of match areas corresponding to the different line laser images in the initial depth image, to obtain the target depth image of the to-be-measured object.

By applying the data acquisition solution provided in the embodiment of the present application, the accuracy of the obtained target depth image of the to-be-measured object.

In one embodiment of the present application, in a static scanning scene, the target depth image determination module 403 is specifically configured for:
for the different line laser images, fusing all of the line laser images by taking a same initial depth image as a reference, to obtain the target depth image of the to-be-measured object.

By applying the data acquisition solution provided in the embodiment of the present application, the accuracy of the obtained target depth image of the to-be-measured object.

In one embodiment of the present application, in a static scanning scene, the target depth image determination module 403 is specifically used for:
fusing the acquired multiple initial depth images to obtain a fused depth image; for each of the line laser images, determining a match area for the line laser image in the fused depth image; fusing the different line laser images according to distribution positions of match areas corresponding to the different line laser images in the fused depth image, to obtain the target depth image of the to-be-measured object.

When using the solution provided in the embodiment of the present application to acquire data, since the fused depth image is derived from multiple initial depth images, three-dimensional object information of the to-be-measured object contained in the fused depth image is more comprehensive. In this way, for each of the line laser images, the match area corresponding to the line laser image can be accurately determined in the fused depth image, and thereby the different line laser images can be fused according to the distribution position of the more accurate match area corresponding to each of the line laser images to obtain the above target depth image, which can improve the accuracy of the obtained target depth image.

In one embodiment of the present application, in a dynamic scanning scene, the target depth image determination module 403 includes:
an area determination submodule configured for: for each of the line laser images, determining a match area for the line laser image in an initial depth image synchronously acquired with the line laser image;
a target depth image determination submodule configured for fusing the different line laser images according to distribution positions of match areas corresponding to the different line laser images in different initial depth images, to obtain the target depth image of the to-be-measured object;
By applying the data acquisition solution provided in the embodiment of the present application, the accuracy of the obtained target depth images of the to-be-measured object can be improved.

In one embodiment of the present application, the target depth image determination submodule is specifically configured for:
for the different initial depth images, calculating pose change information of the depth camera by using the differences between the different initial depth images; performing a position correction on the match areas corresponding to the different line laser images in the different initial depth images by using the calculated pose change information;
fusing the different line laser images according to distribution positions of position-corrected match areas corresponding to the different line laser images in the different initial depth images, to obtain the target depth image of the to-be-measured object.

When using the solution provided in the embodiments of the present application to acquire data, it is possible to perform the position correction on the match areas corresponding to the different initial depth images in the different line laser images, which can improve the accuracy of the match areas corresponding to the different line laser images in the different initial depth images. Therefore, by fusing the different line laser images according to the distribution positions of the position-corrected match areas, the accuracy of the obtained target depth image can be improved.

In addition to the beneficial effects mentioned above, the above-mentioned apparatus embodiments also have the following beneficial effects:
In each of the above apparatus embodiments, the initial depth image of the to-be-measured object can be obtained by using the depth camera, and then laser light is emitted towards the scanning mirror by using the laser light source; the scanning mirror reflects the laser light towards the to-be-measured object in a scanning manner; the laser camera acquires the line laser images of the to-be-measured object during scanning; and the processor combines the initial depth image and the line laser images to obtain the target depth image of the to-be-measured object. Thus it can be seen that, by using the solutions provided in the embodiments of the present application, the accuracy of the obtained target depth image of the object can be improved.

In another embodiment provided in the present application, a computer-readable storage medium is also provided, which has stored therein a computer program that, wherein the computer program, when executed by a processor, carries out any of the above data acquisition methods.

In another embodiment provided in the present application, a computer program product containing instructions is also provided, which, when runs on a computer, causes the computer to carry out any of the data acquisition methods described in the above embodiments.

The above embodiment can be realized in whole or in part by software, hardware, firm ware or any combination thereof. When implemented by software, it can be realized in the form of a computer program product in whole or in part. The computer program product includes one or more computer instructions. When the computer program instruction is loaded and executed on the computer, the flow or function described in the embodiments of the present application is generated in whole or in part. The computer can be a general purpose computer, a special purpose computer, a computer network, or other programmable devices. The computer instruction can be stored in a computer-readable storage medium, or transmitted from one computer-readable storage medium to another computer-readable storage medium. For example, the computer instruction can be transmitted from a website site, a computer, a server or a data center to another website site, computer, server or data center through wired (such as coaxial cable, optical fiber, digital subscriber line (DSL)) or wireless (such as infrared, wireless, microwave, etc.). The computer-readable storage medium can be any available medium that can be accessed by a computer or a data storage device including a server, a data center and the like integrated with one or more available medium. The available media can be a magnetic media (for example, floppy disk, hard disk, magnetic tape), an optical media (for example, DVD), etc.

In the data acquisition solution provided in the above embodiments, the data acquisition device includes the depth camera, the laser light source, the scanning mirror, the laser camera and the processor, wherein the depth camera is configured for acquiring the initial depth image of the to-be-measured object; the laser light source is configured for emitting laser light to the scanning mirror; the scanning mirror is configured for reflecting the laser light to the to-be-measured object in a scanning manner; the laser camera is configured for acquiring the line laser images of the to-be-measured object during scanning; and the processor is configured for fusing different line laser images by taking the initial depth image as a reference, to obtain the target depth image of the to-be-measured object. In this way, firstly, the initial depth image of the to-be-measured object can be obtained by the depth camera, and then laser light is emitted to the scanning mirror by using the laser light source; the scanning mirror reflects the laser light towards the to-be-measured object in a scanning manner; the laser camera acquires the line laser image of the to-be-measured object during scanning; and the processor combines the initial depth image and the line laser images to obtain the target depth image of the to-be-measured object. Thus it can be seen that, by using the solutions provided in the embodiments of the present application, the accuracy of the obtained target depth image of the object can be improved.

It should be noted that in this article, relational terms such as first and second are only to distinguish one entity or operation from another entity or operation, and do not necessarily require or imply any actual relationship or order between these entities or operations. Moreover, the terms "include", "contain", or any other variation thereof are intended to encompass non-exclusive inclusion, such that a process, method, item, or device that includes a series of elements not only includes those elements, but also other elements that are not explicitly listed, or also include elements inherent in such a process, method, item, or device. Without further limitations, the elements limited by the statement "including one..." do not exclude the existence of other identical elements in the process, method, item, or device that includes the elements.

Each embodiment of the present description is described in a relevant manner, and the same and similar parts of each embodiment can be referred to each other, and each embodiment highlights the differences from other embodiment. Particularly for apparatus embodiments, electronic device embodiments, computer-readable storage medium embodiments, and computer program product embodiments, the description is relatively simple because they are basically similar to the method embodiments, and for relevant part, please refer to the partial explanation of method embodiments.

The above description is only the preferred embodiment of the present application and is not intended to limit the present application. Any modifications, equivalent substitutions, improvements, etc. made within the spirit and principles of the present application should be included within the scope of protection of the present application.

## Claims

1. A data acquisition device, comprising a depth camera, a laser light source, a scanning mirror, a laser camera and a processor, wherein:
the depth camera is configured for acquiring an initial depth image of a to-be-measured object;
the laser light source is configured for emitting laser light towards the scanning mirror; and the scanning mirror is configured for reflecting the laser light towards the to-be-measured object in a scanning manner;
the laser camera is configured for acquiring line laser images of the to-be-measured object during scanning;
the processor is configured for fusing different line laser images by taking the initial depth image as a reference, to obtain a target depth image of the to-be-measured object.

2. The device according to claim 1, wherein
the processor is specifically configured for: for each of the line laser images, determining a matching area for the line laser image in the initial depth image; fusing the different line laser images according to distribution positions of match areas corresponding to the different line laser images in the initial depth image, to obtain the target depth image of the to-be-measured object.

3. The device according to claim 1, wherein in a static scanning scene,
the processor is specifically configured for: for the different line laser images, fusing all of the line laser images by taking a same initial depth image as a reference, to obtain the target depth image of the to-be-measured object;
or
the depth camera is specifically configured for acquiring multiple initial depth images of the to-be-measured object; the processor is specifically configured for fusing the acquired multiple initial depth images to obtain a fused depth image; for each of the line laser images, determining a match area for the line laser image in the fused depth image; fusing the different line laser images according to distribution positions of match areas corresponding to the different line laser images in the fused depth image, to obtain the target depth image of the to-be-measured object.

4. The device according to claim 1, wherein in a dynamic scanning scene,
the depth camera is specifically configured for acquiring multiple initial depth images of the to-be-measured object during dynamic scanning, wherein acquisition time of each of the initial depth images is synchronized with acquisition time of each of the line laser images;
the processor is specifically configured for: for each of the line laser images, determining a match area for the line laser image in an initial depth image synchronously acquired with the line laser image; fusing the different line laser images according to distribution positions of match areas corresponding to the different line laser images in different initial depth images, to obtain the target depth image of the to-be-measured object.

5. The device according to claim 4, wherein
the processor is specifically configured for: for each of the line laser images, determining the match area for the line laser image in the initial depth image synchronously acquired with the line laser image; for the different initial depth images, obtaining differences between the different initial depth images, and calculating pose change information of the depth camera by using the differences between the different initial depth images; performing a position correction on the match areas corresponding to the different line laser images in the different initial depth images by using the calculated pose change information; fusing the different line laser images according to distribution positions of position-corrected match areas corresponding to the different line laser images in the different initial depth images, to obtain the target depth image of the to-be-measured object.

6. The device according to any one of claims 1-5, wherein the depth camera comprises a time-of-flight TOF light source and a TOF camera, wherein the TOF light source is configured for emitting TOF light towards the to-be-measured object;
the TOF camera is configured for obtaining the initial depth image of the to-be-measured object based on a flight duration of the TOF light, wherein the flight duration is a duration between an emission time when the TOF light source emits the TOF light and a reception time when the TOF camera receives the TOF light reflected by the to-be-measured object.

7. The device according to any one of claims 1-5, wherein the laser camera is a binocular camera;
and/or
the laser light source is a multi-line laser light source or a single-line laser light source.

8. The device according to any one of claims 1-5, wherein the scanning mirror comprises a reflective mirror and a motion mechanism, the motion mechanism being configured for driving the reflective mirror to move.

9. A data acquisition method applied to a processor in a data acquisition device, wherein the data acquisition device further comprises a depth camera, a laser light source, a scanning mirror, and a laser camera;
the method comprises:
receiving an initial depth image of a to-be-measured object obtained by the depth camera;
receiving line laser images of the to-be-measured object acquired by the laser camera, wherein the line laser images are acquired by the laser camera during the scanning mirror reflecting laser light which is emitted by the laser light source towards the scanning mirror, in a scanning manner towards the to-be-measured object;
fusing different line laser images by taking the initial depth image as a reference, to obtain a target depth image of the to-be-measured object.

10. The method according to claim 9, wherein fusing the different line laser images by taking the initial depth image as the reference, to obtain the target depth image of the to-be-measured object, comprises:
for each of the line laser images, determining a match area for the line laser image in the initial depth image;
fusing the different line laser images according to distribution positions of match areas corresponding to the different line laser images in the initial depth image, to obtain the target depth image of the to-be-measured object.

11. The method according to claim 9, wherein in a static scanning scene, fusing the different line laser images by taking the initial depth image as the reference, to obtain the target depth image of to-be-measured object, comprises:
for the different line laser images, fusing all of the line laser images by taking a same initial depth image as a reference, to obtain the target depth image of the to-be-measured object;
or
fusing received multiple initial depth images to obtain a fused depth image; for each of the line laser images, determining a match area for the line laser image in the fused depth image; fusing the different line laser images according to distribution positions of match areas corresponding to the different line laser images in the fused depth image, to obtain the target depth image of the to-be-measured object.

12. The method according to claim 9, wherein, in a dynamic scanning scene, fusing the different line laser images by taking the initial depth image as the reference, to obtain the target depth image of the to-be-measured object, comprises:
for each of the line laser images, determining a match area for the line laser image in an initial depth image synchronously acquired with the line laser image;
fusing the different line laser images according to distribution positions of match areas corresponding to the different line laser images in different initial depth images, to obtain the target depth image of the to-be-measured object.

13. The method according to claim 12, wherein fusing the different line laser images according to the distribution positions of the match areas corresponding to the different line laser images in the different initial depth images, to obtain the target depth image of the to-be-measured object, comprises:
for the different initial depth images, obtaining differences between the different initial depth images, and calculating pose change information of the depth camera by using the differences between the different initial depth images; performing a position correction on the match areas corresponding to the different line laser images in the different initial depth images by using the calculated pose change information;
fusing the different line laser images according to distribution positions of position-corrected match areas corresponding to the different line laser images in the different initial depth images, to obtain the target depth image of the to-be-measured object.

14. A data acquisition apparatus arranged at a processor in a data acquisition device, wherein the data acquisition device further comprises a depth camera, a laser light source, a scanning mirror, and a laser camera;
the apparatus comprises:
a first image receiving module, configured for receiving an initial depth image of a to-be-measured object obtained by the depth camera;
a second image receiving module, configured for receiving line laser images of the to-be-measured object acquired by the laser camera, wherein the line laser images are acquired by the laser camera during the scanning mirror reflecting laser light which is emitted by the laser light source towards the scanning mirror, in a scanning manner towards the to-be-measured object;
a target depth image determination module, configured for fusing different line laser images by taking the initial depth image as a reference, to obtain a target depth image of the to-be-measured object.

15. The device according to claim 14, wherein
the target depth image determination module is specifically configured for: for each of the line laser images, determining a match area for the line laser image in the initial depth image; fusing the different line laser images according to distribution positions of match areas corresponding to the different line laser images in the initial depth image, to obtain the target depth image of the to-be-measured object;
or,
in a static scanning scene, the target depth image determination module is specifically configured for: for the different line laser images, fusing all of the line laser images by taking a same initial depth image as a reference, to obtain the target depth image of the to-be-measured object; or, fusing received multiple initial depth images to obtain a fused depth image; for each of the line laser images, determining a match area for the line laser image in the fused depth image; fusing the different line laser images according to distribution positions of match areas corresponding to the different line laser images in the fused depth image, to obtain the target depth image of the to-be-measured object;
or,
in a dynamic scanning scene, the target depth image determination module comprises an area determination submodule configured for: for each of the line laser images, determining a match area for the line laser image in an initial depth image synchronously acquired with the line laser image; a target depth image determination submodule configured for fusing the different line laser images according to distribution positions of match areas corresponding to the different line laser images in different initial depth images, to obtain the target depth image of the to-be-measured object;
or,
the target depth image determination submodule is specifically configured for: for the different initial depth images, obtaining differences between the different initial depth images, and calculating pose change information of the depth camera by using the differences between the different initial depth images; performing a position correction on the match areas corresponding to the different line laser images in the different initial depth images by using the calculated pose change information; fusing the different line laser images according to distribution positions of position-corrected match areas corresponding to the different line laser images in the different initial depth images, to obtain the target depth image of the to-be-measured object.

16. A computer-readable storage medium having stored therein a computer program, wherein the computer program, when executed by a processor, carries out the method according to any one of claims 9-13.
